# EUROPEAN PATENT APPLICATION

(11) **EP 4 459 783 A1**
(43) Date of publication of application: **06.11.2024**
(21) Application number: 22915789.6
(22) Date of filing: 16.12.2022
(51) Int. Cl.: H01M 50/538, H01M 10/04, H01M 50/533, H01M 50/548

(54) **CURRENT COLLECTOR PLATE AND POWER STORAGE DEVICE**

(30) Priority: 28.12.2021 JP 2021214480
(71) Applicant: Panasonic Holdings Corporation, Osaka, 571-8501 (JP); Panasonic Energy Co., Ltd., Osaka 570-8511 (JP)
(72) Inventor: GESHI, Shinya, Osaka 571-0057 (JP); OKUTANI, Oose, Osaka 571-0057 (JP)
(74) Representative: Eisenführ Speiser
(86) International application number: PCT/JP2022/046503
(87) International publication number: WO 2023/127565

(57) **Abstract**

A current collector plate includes: a body part that is plate-shaped (radial extending part); and a tongue part that includes a base piece that is connected to the body part (radial extending part) and a tip piece that is bent from the base piece. The tongue part extends from an edge of the body part. The edge extends in a radial direction. The tongue part includes a cantilever structure in which only one end of the tongue part in a direction in which the tongue part extends from the edge is connected to the body part.

## Description

### TECHNICAL FIELD

The present disclosure relates to a configuration of a current collector plate of a cylindrical battery.

### BACKGROUND ART

A cylindrical battery generally includes a wound electrode body, a bottomed cylindrical outer covering can that houses the electrode body, and a sealing body that covers the opening of the outer covering can.

In such a cylindrical battery, for example, the sealing body serves as a positive external terminal and the outer covering can serves as a negative external terminal. Patent Literature (PTL) 1 discloses a configuration in which the positive electrode in the electrode body protrudes upward, and the protruding part is connected to the sealing body via a positive electrode current collector plate.

### Citation List

### Patent Literature

[PTL 1] Japanese Unexamined Patent Application Publication No. 2006-261083

### SUMMARY OF THE INVENTION

Here, the electrode body includes electrodes that are wound. The positive electrode includes a positive electrode mixture layer containing a positive electrode active material, and a negative electrode includes a negative electrode mixture layer containing a negative electrode active material. The positive electrode mixture layer and the negative electrode mixture layer are expanded or contracted by charging and discharging. Thus, the electrode is displaced in the winding direction and the radial direction by charging and discharging. The electrode, on the other hand, is fixed to an electrode current collector plate by, for example, welding. The electrode current collector plate is not expanded or contracted by charging and discharging, so the electrode current collector plate is not capable of following the movement of the electrode, which may impose a load on the electrode.

A current collector plate according to the present disclosure includes: a body part that is plate-shaped; and a tongue part that includes a base piece that is connected to the body part and a tip piece that is bent from the base piece. The tongue part extends from an edge of the body part, and the edge extends in a radial direction. The tongue part includes a cantilever structure in which only one end of the tongue part in the direction in which the tongue part extends from the edge is connected to the body part.

According to the present disclosure, the current collector plate is capable of following the movement of the electrode, leading to a reduction in the load imposed on the electrode.

### BRIEF DESCRIPTION OF THE DRAWINGS

[FIG. 1] FIG. 1 is a cross-sectional view of battery 1 according to an example of an embodiment.
[FIG. 2A] FIG. 2A illustrates a configuration of a current collector plate, and is a bottom view of a lower current collector plate when viewed from the bottom along the axis of the lower current collector plate.
[FIG. 2B] FIG. 2B illustrates a configuration of the current collector plate, and is a bottom perspective view of the current collector plate.
[FIG. 3] FIG. 3 schematically illustrates a configuration of tongue parts.
[FIG. 4A] FIG. 4A illustrates a connection state of negative electrode core exposed parts to the tongue part when viewed in a circumferential direction.
[FIG. 4B] FIG. 4B illustrates a connection state of the negative electrode core exposed part to the tongue part when viewed in a radial direction.
[FIG. 5] FIG. 5 schematically illustrates a wound state of an electrode body.
[FIG. 6] FIG. 6 schematically illustrates another configuration of the tongue part.

### DESCRIPTION OF EMBODIMENT

With reference to the accompanying drawings, an example of an embodiment of a power storage device according to the present disclosure will be described in details below. The present disclosure includes a structure resulting from selective combination of a plurality of embodiments and variations described below.

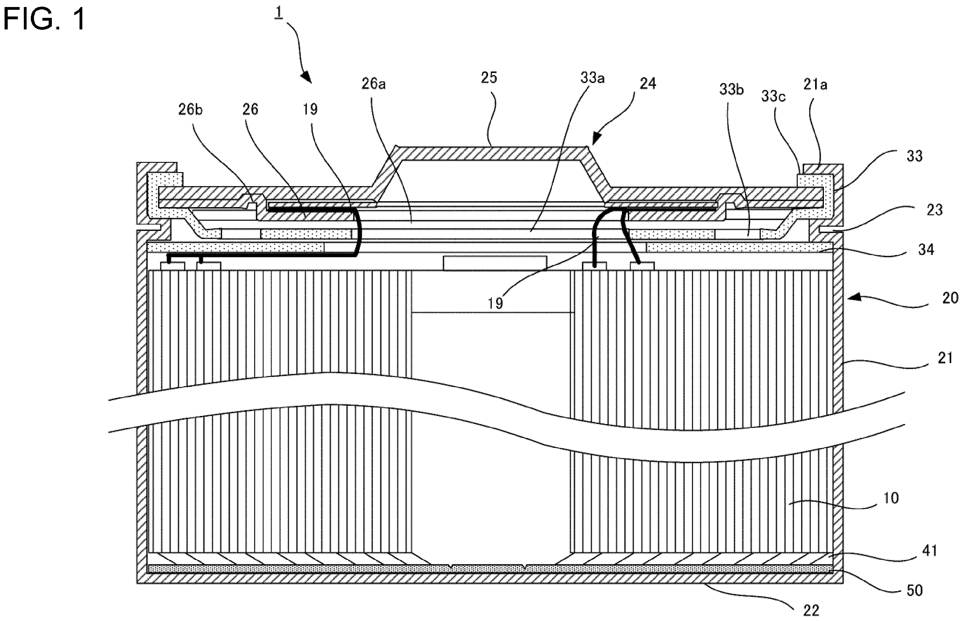

[Overall Configuration] FIG. 1 is a cross-sectional view of battery 1 that is an example of a power storage device according to an embodiment. As illustrated in FIG. 1, battery 1 includes: electrode body 10; outer covering can 20 that houses electrode body 10 and includes tubular part 21, a bottom part that covers one end of the tubular part, and an opening at the other end of the tubular part; and sealing body 24 that covers the opening of outer covering can 20. Outer covering can 20 houses electrolyte together with electrode body 10. Although the electrolyte may be an aqueous electrolyte, a non-aqueous electrolyte is used in the present embodiment. Outer covering can 20 includes circular groove 23 in tubular part 21. Sealing body 24 is supported by groove 23 to cover the opening of outer covering can 20. For explanatory convenience, in the following description, the side of battery 1 on which sealing body 24 is disposed is defined as the top and the side of outer covering can 20 on which bottom part 22 is disposed is defined as the bottom.

Battery 1 further includes electrode leads and upper insulating plate 34 that is disposed between electrode body 10 and sealing body 24. Each electrode lead extends from a position opposite groove 23 on the outer periphery of electrode body 10, and directly connects a first electrode forming electrode body 10 and current collector plate 26 of sealing body 24. Electrode body 10 is a wound electrode body in which first and second electrodes are wound via a separator. In the present embodiment, the first electrode is a positive electrode, the second electrode is a negative electrode, and the electrode leads are positive electrode leads 19.

Positive electrode leads 19 electrically connect the positive electrode and sealing body 24. The negative electrode connects the protrusion of the negative electrode and the negative electrode current collector plate, and electrically connects the negative electrode current collector plate to outer covering can 20, as described below. Accordingly, sealing body 24 functions as a positive external terminal, and outer covering can 20 functions as a negative terminal. Upper insulating plate 34 prevents the positive electrode and positive electrode leads 19 from contacting outer covering can 20, and also prevents positive electrode leads 19 from contacting the negative electrode of electrode body 10. It may also be that the positive electrode includes a protrusion formed by axially extending a positive electrode plate, and that the protrusion is electrically connected to sealing body 24 via a current collector plate.

The positive electrode, the negative electrode, and the separator of electrode body 10 are long and belt-shaped bodies that are alternately stacked in the radial direction of electrode body 10 by being wound in a spiral shape. The negative electrode mixture layer has a dimension slightly larger than the dimension of the positive electrode mixture layer in order to prevent lithium precipitation. In other words, the negative electrode mixture layer is longer in the lengthwise and width (widthwise) directions than the positive electrode mixture layer. The separator has a dimension at least slightly larger than the positive electrode, and, for example, two separators are disposed sandwiching the positive electrode.

The positive electrode includes a belt-shaped positive electrode core and a positive electrode mixture layer that is disposed on at least one side of the positive electrode core. For the positive electrode core, foils of metals that are stable within the potential range of the positive electrode, such as aluminum and aluminum alloys, and films with such metals on the surface layer can be used. It is preferable that the positive electrode mixture layer contains a positive electrode active material, a conductive agent such as acetylene black, and a binding agent such as polyvinylidene fluoride, and is disposed on both sides of the positive electrode core. For example, lithium transition metal composite oxide is used for the positive electrode active material. Although positive electrode lead 19 is connected to the positive electrode, it is preferable that positive electrode lead 19 is directly joined to the positive electrode core by welding or the like.

The negative electrode includes a belt-shaped negative electrode core and a negative electrode mixture layer that is disposed on at least one side of the negative electrode core. For the negative electrode core, foils of metals that are stable within the potential range of the negative electrode, such as copper and copper alloys, and films with such metals on the surface layer can be used. It is preferable that the negative electrode mixture layer contains a negative electrode active material and a binding agent such as styrene-butadiene rubber (SBR), and is disposed on both sides of the negative electrode core. Graphite and silicon-containing compounds, for example, are used for the negative electrode active material. A tongue-shaped negative electrode lead may be joined to the current collector plate by direct joint to the negative electrode core, for example, by welding.

The non-aqueous electrolyte housed in outer covering can 20 contains a non-aqueous solvent and electrolyte salts dissolved in the non-aqueous solvent. For non-aqueous solvents, for example, esters, ethers, nitriles, amides, and mixtures of two or more of these solvents are used. Non-aqueous solvents may contain halogen substitutes in which at least part of the hydrogen of these solvents is replaced with halogen atoms such as fluorine. Examples of non-aqueous solvents include ethylene carbonate (EC), ethyl methyl carbonate (EMC), dimethyl carbonate (DMC), and mixtures of these solvents. Lithium salts such as LiPF₆ are used, for example, for electrolyte salts.

Outer covering can 20 is a bottomed cylindrical metal container with an opening at one axial end (top end), and includes cylindrical tubular part 21 and bottom part 22 that is circular in shape when viewed from the bottom. Outer covering can 20 is generally made of a metal mainly containing iron, but may also be made of a metal mainly containing aluminum or the like, especially when outer covering can 20 is electrically connected to the positive electrode. Outer covering can 20 also includes groove 23 disposed in the circumferential direction of tubular part 21. Groove 23 is positioned in the vicinity of the opening of outer covering can 20, at a predetermined length away from the opening edge (top end of outer covering can 20). The predetermined length is, for example, equivalent to 1% to 20% of the axial length of outer covering can 20.

In the present embodiment, bottom part 22 of outer covering can 20 includes a safety valve mechanism that is activated in the event of an abnormality in battery 1. On the other hand, sealing body 24 does not include a safety valve mechanism. Bottom part 22 includes, for example, a thin part. When an abnormality occurs in battery 1 and the internal pressure increases, the thin part is preferentially ruptured and a gas exhaust port is formed in bottom part 22.

Groove 23 is a part of tubular part 21 that extends into outer covering can 20, and is formed, for example, by spinning tubular part 21 from the outside. At the position where groove 23 is provided, outer covering can 20 is reduced in diameter, and a narrow line-shaped groove is formed on the outer peripheral surface of tubular part 21. It is preferable that groove 23 has a generally U-shaped cross section, and is annularly disposed over the entire circumferential length of tubular part 21. Groove 23 is formed by machining tubular part 21 after electrode body 10 is housed in outer covering can 20.

The inner diameter of outer covering can 20 at the position where groove 23 is provided is, for example, 80% to 99% of the maximum inner diameter of outer covering can 20. An example of the length of groove 23 in the radial direction of outer covering can 20 is 0.5 mm to 2.0mm. Since the diameter of electrode body 10 is approximately the same as the maximum inner diameter of outer covering can 20, electrode body 10 and groove 23 overlap with each other in the top-bottom directions of battery 1. In the present embodiment, the lower end of positive electrode lead 19 is connected to the upper end of the positive electrode at several positions, and the other end of positive electrode lead 19 is connected to cap 25 via current collector plate 26.

Sealing body 24 includes cap 25, current collector plate 26, and gasket 33, and is in the shape of a disk as a whole. Sealing body 24 is disposed above groove 23 of outer covering can 20, and is fixed to the opening of outer covering can 20. The top end of the opening is bent inward and is crimped to sealing body 24 via gasket 33. In other words, sealing body 24 is fixed to the top end part of outer covering can 20 by groove 23 and the crimping part of outer covering can 20 and covers the opening of outer covering can 20. The crimping part is annular in the circumferential direction of outer covering can 20, and sandwiches sealing body 24 with groove 23.

Cap 25 is a disk-shaped metal member that is exposed outside outer covering can 20, and forms the top face of battery 1. Cap 25 has a radial central part that protrudes outward from battery 1 (a raised part). A wiring material is connected to cap 25 when battery 1 is modularized to form a battery assembly. Therefore, cap 25 functions as an external terminal of battery 1, and is also called an external terminal or a top cover. In the present embodiment, positive electrode lead 19 is connected to current collector plate 26, and cap 25 functions as a positive external terminal.

Current collector plate 26 is a metal member with a diameter that is approximately the same as cap 25, and is positioned closer to electrode body 10 than cap 25 is. Current collector plate 26 includes opening 26a in the radial central part, and is annular in shape. Cap 25 and current collector plate 26 are welded together. For example, current collector plate 26 is welded at a position closer to the outer peripheral edge of cap 25 than the radial central part of cap 25 is. Current collector plate 26 includes annular protrusion 26b to be described later, and protrusion 26b serves as a part that is welded with cap 25. Since positive electrode lead 19 connected to the positive electrode of electrode body 10 is connected to current collector plate 26 as described above, current collector plate 26 functions as a positive electrode current collector plate.

Gasket 33 is disposed on the outer peripheral part of the stack of cap 25 and current collector plate 26. Gasket 33 is an annular resin or rubber member that prevents contact between cap 25 and current collector plate 26 and outer covering can 20 to ensure insulation between outer covering can 20 and sealing body 24. Gasket 33 covers the top surface of cap 25, the lateral surfaces of cap 25 and current collector plate 26, and the bottom surface of current collector plate 26 at the outer peripheral part of the stack described above. Gasket 33 fills the gap between outer covering can 20 and sealing body 24, sealing the interior of battery 1.

Gasket 33 covers most of the bottom surface of current collector plate 26, and is interposed between current collector plate 26 and upper insulating plate 34. The radial central part of gasket 33 includes opening 33a that overlaps opening 26a of current collector plate 26 in the up and down directions. Gasket 33 may also include through hole 33b in the part located below current collector plate 26. Although electrolyte is expected to accumulate on the top surface of gasket 33, through hole 33b allows the electrolyte to be efficiently returned to electrode body 10 side. A plurality of through holes 33b are provided, for example, in the circumferential direction of gasket 33. In addition, gasket 33 includes inward extending part 33c that extends inward from the outer peripheral part of cap 25.

The top end of outer covering can 20 may be bent inward to form edge part 21a, and may be used as a negative external terminal.

Here, electrode body 10 includes a wound structure in which long positive electrode 11 and long negative electrode 12 are wound via two long separators 13. Negative electrode 12 protrudes downward relative to positive electrode 11 and separators 13. In negative electrode 12, the core exposed part in negative electrode core 40 where negative electrode mixture layer 42 is not provided serves as a negative electrode protrusion. Negative electrode 12 includes negative electrode core exposed part 41 at the axial lower end part from the edge at the beginning of winding in the lengthwise direction to the edge at the end of winding in the lengthwise direction of long negative electrode 12. Therefore, the lower axial end part of electrode body 10 is made of negative electrode core exposed part 41. Negative electrode core exposed part 41 may be joined to lower current collector plate 18 while being inclined toward the center in the radial direction.

One end of positive electrode lead 19 is connected to the positive electrode core close to the upper of electrode body 10, and the other end of positive electrode lead 19 is connected to current collector plate 26.

Metal lower current collector plate (lower current collector plate) 18 made of nickel, nickel alloy, or the like, is disposed closer to the lower of electrode body 10. Negative electrode core exposed part 41 of electrode body 10 is joined to lower current collector plate 18. Lower current collector plate 18 is joined to the inner surface of the bottom plate part of outer covering can 20, and outer covering can 20 is connected to negative electrode 12.

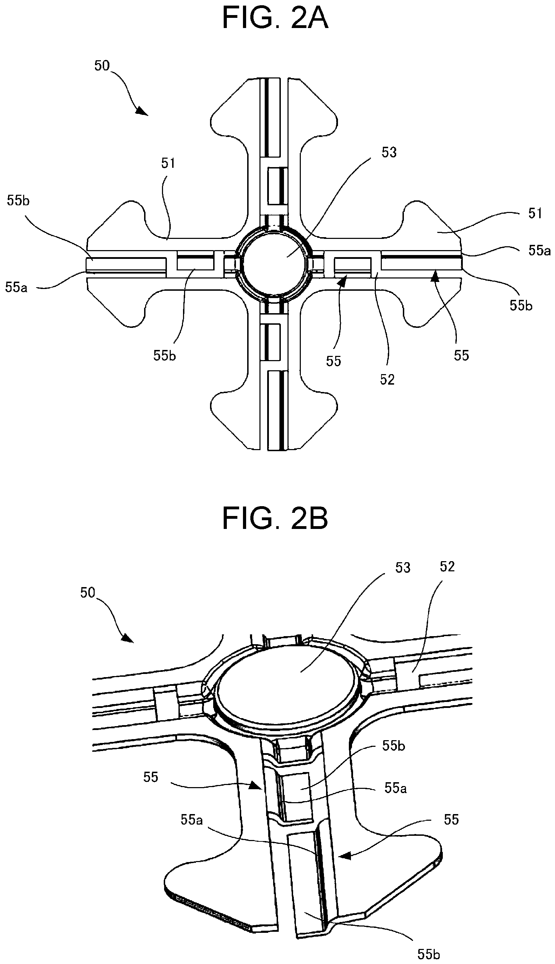

[Configuration of Lower Current Collector Plate 18]FIG. 2A is a bottom view of lower current collector plate 18 when viewed from the bottom along the axis, and FIG. 2B is a bottom perspective view of current collector plate 18.

Lower current collector plate 18 basically includes plate-shaped body part 50. Body part 50 includes circular central part 53 that is sectioned by a circular groove formed around central part 53 and is joined to bottom part 22. A plurality of radial extending parts 51 prolonging radially from central part 53 are spaced circumferentially. In this example, four radial extending parts 51 spaced every 90 degrees extend from central part 53 in the radial direction.

Radial extending parts 51 may extend in two, three, or five or more directions instead of four directions.

Each radial extending part 51 is in a shape of an elongated plate with a widened outer peripheral side. Radial extending part 51 includes cutout part 52 that prolongs from the vicinity of central part 53 to the outer edge, thereby separating the circumferential direction. Radial extending part 51 may include, instead of cutout part 52, a through hole that axially prolongs. Radial extending part 51 includes tongue parts 55 each of which has a cantilever structure in which only one end of tongue part 55 is connected to the edge of radial extending part 51. Each tongue part 55 includes base piece 55a and tip piece 55b. Base piece 55a is bent in a mountain shape from the circumferential end of radial extending part 51 and prolongs toward electrode body 10. Tip piece 55b is bent in a valley shape from base piece 55a, includes a flat surface, and is joined to negative electrode core exposed part 41. Tongue part 55 is bent in such a serpentine shape. Tongue part 55 may extend from the inner peripheral edge of the through hole whose opening extends in the axial direction instead of cutout part 52.

In this example, one radial extending part 51 includes two tongue parts 55 aligned axially. One of tongue parts 55 is on the inner side in the radial direction and the other one is on the outer side in the radial direction. Two tongue parts 55 prolong in opposite directions such that tongue part 55 on the inner side extends anticlockwise and tongue part 55 on the outer side extends clockwise. The inner and outer tongue parts 55 may extend in the same direction from the edge on the same side of cutout part 52 in the circumferential direction. One of inner and outer tongue parts 55 may extend from the inner peripheral edge of the through hole and the other may extend from the edge of the cutout part. Three or more tongue parts 55 may be aligned in the radial direction.

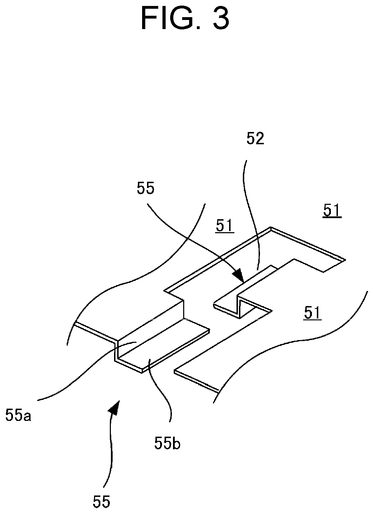

FIG. 3 schematically illustrates tongue parts 55. As illustrated, each tongue part 55 is bent in a staircase shape, has a free end at the tip, and has a circumferential cross section (lateral face viewed in the radial direction) that is S-shaped or Z-shaped (the boundary between the base piece and the tip piece overlaps the body part when viewed along the axis). Tip piece 55b includes a flat surface. Negative electrode core exposed part 41 of negative electrode 12 is connected to the face of tip piece 55b facing electrode body 10. In tongue part 55, base piece 55a is capable of rocking with the bent part from radial extending part 51 as a boundary, and tip piece 55b is capable of rocking with the bent part from base piece 55a as a boundary.

Therefore, when negative electrode 12 expands or contracts, and moves in the circumferential direction, tip piece 55b of tongue part 55 is capable of following the movement, leading to a reduction in the load imposed on negative electrode 12.

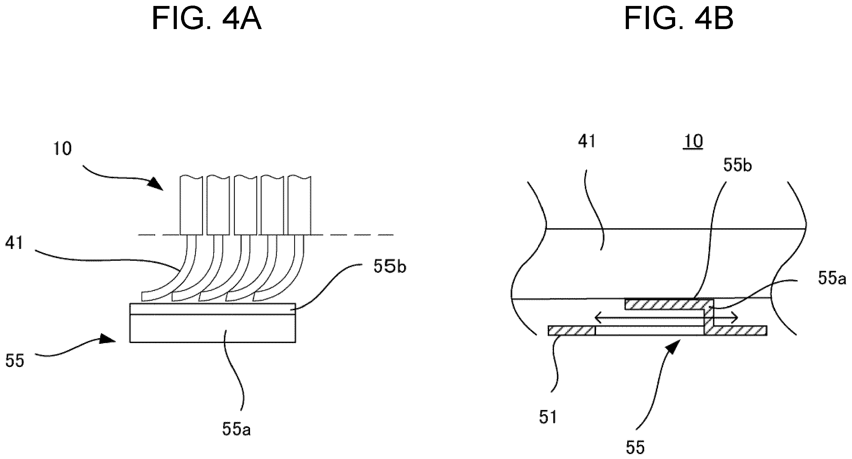

FIG. 4A and FIG. 4B each illustrate the connection state of negative electrode core exposed part 41 to tongue part 55. FIG. 4A is a view in the circumferential direction and FIG. 4B is a view from the radial direction.

In such a manner, negative electrode core exposed part 41 is inclined in the radial direction, and the tip of negative electrode core exposed part 41 is connected to tip piece 55b of tongue part 55. In such a manner, negative electrode core exposed part 41 is inclined in the radial direction and the tip side of negative electrode core exposed part 41 is fixed to tip piece 55b of tongue part 55. Therefore, when negative electrode 12 of electrode body 10 moves, negative electrode core exposed part 41 is capable of absorbing the radial movement, eliminating the problem of the electrode movement due to radial expansion and contraction of electrode body 10. When the length of tongue part 55 in the extending direction is greater than the length of tongue part 55 in the thickness direction (axial direction) of body part 50, followability to the displacement of the electrode body is further increased.

The connection between negative electrode core exposed part 41 and tip piece 55b of tongue part 55 can be made by laser welding or the like. In addition to laser welding, various other means such as electron beam welding, brazing, resistance welding, friction stir welding, and ultrasonic welding can be employed.

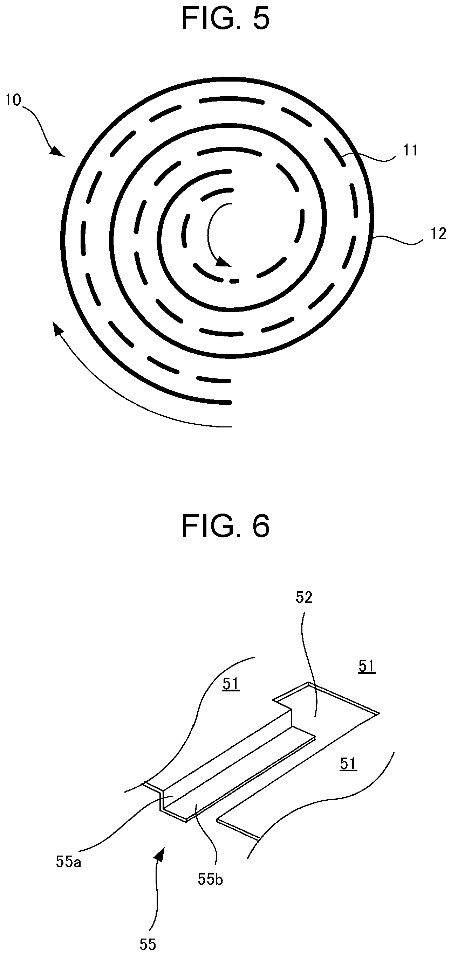

FIG. 5 schematically illustrates the wound state of electrode body 10, illustrating positive electrode 11 and negative electrode 12 while separator 13 is omitted. As described above, positive electrode 11 includes a positive electrode mixture layer, and negative electrode 12 includes a negative electrode mixture layer. The positive electrode mixture layer and the negative electrode mixture layer are expanded and contracted by charging and discharging. In particular, the positive electrode mixture layer and the negative electrode mixture layer expand significantly during initial charging. During the initial charging, a radial gap is provided between electrode body 10 and outer covering can 20, and thus electrode body 10 expands in the radial direction. The circumferential movement of electrode body 10 is that the beginning part of the winding and the end part of the winding retract inward. In other words, the inside and the outside of electrode body 10 move in opposite directions in the circumferential direction. In the present embodiment, two tongue parts 55 are disposed in the radial direction, so that two tongue parts 55 are capable of following the movement in different circumferential directions.

In the present embodiment, two tongue parts 55 are disposed in the radial direction, so that two tongue parts 55 are capable of following the movement in different circumferential directions.

Since the movement of the electrode in electrode body 10 depends on various conditions, appropriate lower current collector plate 18 may be disposed according to the configuration of electrode body 10.

FIG. 6 schematically illustrates another configuration example of tongue part 55. In this example, radial extending part 51 includes only one tongue part 55. This configuration also allows tongue part 55 to follow the movement of the electrode.

In the present embodiment, lower current collector plate 18 that contacts negative electrode core exposed part 41 of negative electrode 12 has been described. However, this configuration of the current collector plate may also be applied to a current collector plate disposed on the upper side of electrode body 10, or a positive electrode current collector plate.

### REFERENCE MARKS IN THE DRAWINGS

- 1: battery
- 10: electrode body
- 11: positive electrode
- 12: negative electrode
- 13: separator
- 18: lower current collector plate
- 19: positive electrode lead
- 20: outer covering can
- 21: tubular part
- 21a: edge part
- 22: bottom part
- 23: groove
- 24: sealing body
- 25: cap
- 26: current collector plate
- 26a: opening
- 26b: protrusion
- 30: positive electrode core
- 31: positive electrode core exposed part
- 32: positive electrode mixture layer
- 33: gasket
- 33a: opening
- 33b: through hole
- 33c: inward extending part
- 34: upper insulating plate
- 40: negative electrode core
- 41: negative electrode core exposed part
- 42: negative electrode mixture layer
- 50: body part
- 51: radial extending part
- 52: cutout part
- 53: central part
- 55: tongue part
- 55a: base piece
- 55b: tip piece

## Claims

1. A current collector plate comprising:
a body part that is plate-shaped;
a tongue part that includes a base piece that is connected to the body part and a tip piece that is bent from the base piece, the tongue part extending from an edge of the body part, the edge extending in a radial direction of the body part, the tongue part including a cantilever structure in which only one end of the tongue part in a direction in which the tongue portion extends from the edge is connected to the body portion.

2. The current collector plate according to claim 1,
wherein a length of the tongue part in the direction in which the tongue part extends is longer than a length of the tongue part in a thickness direction of the body part.

3. The current collector plate according to claim 1 or claim 2,
wherein the tongue part is bent up in a serpentine shape, and
the tongue part includes a circumferential cross section that is S-shaped or Z-shaped.

4. The current collector plate according to any one of claims 1 to 3,
wherein the body part includes a cutout part that is cut out in the radial direction, and
the edge is an edge of the cutout part.

5. The current collector plate according to any one of claims 1 to 4,
wherein the body part includes a through hole, and
the edge is an inner peripheral edge of the through hole.

6. The current collector plate according to any one of claims 1 to 5,
wherein the body part incudes a central part and at least two radial extending parts each of which prolongs radially outward from the central part, and
the base piece of the tongue part is bent from one circumferential end of each of the at least two radial extending parts.

7. The current collector plate according to claim 6,
wherein each of the at least two radial extending parts includes two tongue parts that are aligned in the radial direction, each of the two tongue parts being the tongue part.

8. The current collector plate according to claim 7,
wherein, among the two tongue parts, a tongue part on an inner side in the radial direction includes a base piece that is bent from a first circumferential end of the tongue part and a tongue part on an outer side in the radial direction includes a base piece that is bent from a second circumferential end of the tongue part.

9. A power storage device comprising:
an electrode body including a positive electrode, a negative electrode, and a separator, the positive electrode and the negative electrode being wound via the separator, the electrode body including an electrode protrusion that is one of the positive electrode and the negative electrode protruding at one end along an axis of the one of the positive electrode and the negative electrode;
an outer covering can that houses the electrode body; and
a current collector plate that collects current by opposing and contacting the electrode protrusion of the electrode body along the axis,
wherein the current collector plate is the current collector plate according to any one of claims 1 to 8, and
the electrode protrusion is connected to a face of the tip piece facing the electrode body.
